# EUROPÄISCHE PATENTANMELDUNG

(11) **EP 2 347 882 A2**
(43) Veröffentlichungstag der Anmeldung: **27.07.2011**
(21) Anmeldenummer: 10195155.6
(22) Anmeldetag: 15.12.2010
(51) Int. Cl.: B29C 49/06, B29C 43/00

(54) **Vorrichtung und Verfahren zum Herstellen von Behältern aus Kunststoff**

(30) Priorität: 21.01.2010 DE 102010001096
(71) Anmelder: Krones AG, 93073 Neutraubling (DE)
(72) Erfinder: Albrecht, Thomas, 92339, Beilngries (DE)
(74) Vertreter: Grünecker, Kinkeldey, Stockmair & Schwanhäusser Anwaltssozietät

(57) **Zusammenfassung**

Es wird eine Vorrichtung und ein Verfahren zum Herstellen von Behältern aus Kunststoff beschrieben, wobei in einer Gießform ein Preform hergestellt und dieser in einer Blasform fertiggestellt wird. Um eine konstruktiv einfache Ausgestaltung und eine verbesserte Temperaturführung zu gewährleisten, wird vorgeschlagen, die Gieß- und die Blasform zu einem Formenkomplex aufzureihen.

## Beschreibung

Die Erfindung bezieht sich auf eine Vorrichtung und ein Verfahren zum Herstellen von Behältern aus Kunststoff der in den Oberbegriffen der Ansprüche 1 und 14 beschriebenen Art.

Eine derartige Vorrichtung ist aus der DE 197 37 697 A1 bekannt. Die bekannte Vorrichtung enthält eine Gießform in Form einer Spritzgussform, in der ein Kunststoffrohling, ein sogenannter Preform, hergestellt wird. In der Blasform wird dieser Preform zum fertigen Behälter ausgeblasen. Es sind jeweils eine Vielzahl von Gießformen vorgesehen, die auf bevorzugt zwei Spritzgussformrotoren angeordnet sind, die sich nacheinander an einem Extruder vorbeibewegen, der die Spritzgussformen mit flüssigem Kunststoff füllt. Anschließend werden die in den Spritzgussformen gebildeten Preforms an einen Transferrotor übergeben. Der Transferrotor übergibt die Preforms anschließend einem Blasformrotor, der mit einer Vielzahl umfangsseitiger Blasformen versehen ist. Jeder Preform wird in eine Blasform eingesetzt und zum fertigen Behälter ausgeblasen.

Das Ausblasen geschieht bevorzugt mit Hilfe einer Reckstange, die den Preform in axialer Richtung reckt, während das eingeführte Druckgas (meist Luft) für eine radiale Reckung des Preform sorgt. Reckstangen sind bei der Herstellung von Kunststoffbehältern üblich und beispielsweise in der US 4 039 641 beschrieben.

Ein Problem bei der Übergabe der spritzgegossenen Preforms an die Blasform liegt in der Temperaturführung, die nie exakt definierbar ist, da die Preforms bei der Übergabe Außenbedingungen ausgesetzt sind, die je nach den Umweltverhältnissen (Außentemperatur) variieren. Deshalb ist es sicherer, die Preforms abkühlen zu lassen und eine Heizeinrichtung zum Erwärmen der Preforms auf die vorbestimmte Temperatur zum Blasen vorzusehen. Weiterhin ist die bekannte Vorrichtung konstruktiv sehr aufwändig und benötigt sehr viel Stellfläche.

Der Erfindung liegt die Aufgabe zugrunde, eine Vorrichtung und ein Verfahren zum Herstellen von Behältern aus Kunststoff bereitzustellen, die konstruktiv einfach aufgebaut ist und eine kontrollierte Temperaturführung gestattet.

Die Aufgabe wird bei einer Vorrichtung durch die Merkmale des Anspruchs 1 und bei einem Verfahren durch die Merkmale des Anspruchs 14 gelöst.

Durch die erfindungsgemäße Ausgestaltung kann der Preform direkt zwischen beiden Formen, d.h. der Gießform und der Blasform übergeben werden, ohne dass er zwischenzeitlich Umgebungsbedingungen ausgesetzt ist. Dadurch kann die vorbestimmte Blastemperatur exakt eingehalten werden, ohne dass ein zwischenzeitliches Erwärmen stattfinden muss. Der erfindungsgemäße Formenkomplex kann weiterhin auf einer einzigen Transporteinrichtung, bevorzugt einem Rotor, angeordnet werden, so dass die benötigte Stellfläche mindestens halbiert wird.

Vorteilhafte Weiterbildungen der Erfindung sind den Unteransprüchen zu entnehmen.

Ein weiterer konstruktiver Vorteil liegt in der Tatsache, dass die zum Herstellen des Preform benötigte Innenform oder Außenform eine Vielzahl von Aufgaben sowohl in der Gießform als und besonders auch in der Blasform übernehmen kann. Die Innenform kann beispielsweise die Funktion eines Ausstoßers oder der Überführungseinrichtung zwischen den Formen übernehmen. Die Innenform kann zusätzlich oder alternativ auch als Reckdorn und/oder als Blaslanze in der Blasform eingesetzt werden. Schließlich ist es sogar möglich, die Innenform oder die Außenform zum Zuführen von Produkt zu verwenden, mit dem der Behälter nach dem Blasen gefüllt werden soll, so dass auf der gleichen Transporteinrichtung (Rotor) sowohl die Herstellung der Behälter als auch deren Befüllung stattfinden kann. Ebenso kann sich entweder in der Innenform oder in der Außenform eine Rückluftleitung für den Vorgang des Befüllens befinden.

Durch die Anordnung einer Temperiereinrichtung in der Gießform kann diese an den geeigneten Stellen zusätzlich erwärmt oder stärker abgekühlt werden, so dass ein vorbestimmtes Temperaturprofil auf den Preform aufgeprägt werden kann.

Die Innenform kann weiterhin mit einer Kühleinrichtung versehen werden, mit der beispielsweise diejenigen Stellen, die beim Blasen weniger verstreckt werden sollen, gekühlt werden können. Dies trifft beispielsweise auf den Bereich der Mündung des Preform zu, wo Maßhaltigkeit erforderlich ist.

Die Erfindung kann mit jeder Art von Gießform verwirklicht werden, insbesondere mit den beiden herkömmlichsten Gießformen, d.h. einer Spritzgießform oder einer Pressform.

Ausführungsbeispiele der Erfindung werden nachfolgend anhand der Zeichnungen näher erläutert. Es zeigen:
- Fig. 1: eine schematische Draufsicht auf eine erfindungsgemäße Vorrichtung,
- Fig. 2: einen Formenkomplex der Vorrichtung,
- Fig. 3: der Formenkomplex aus Fig. 2 in einem weiteren Verfahrensschritt,
- Fig. 4: der Formenkomplex nach Fig. 2 in einem weiteren Verfahrensschritt,
- Fig. 5: der Formenkomplex nach Fig. 2 in einem weiteren Verfahrensschritt,
- Fig. 6: der Formenkomplex nach Fig. 2 in einem weiteren Verfahrenschritt,
- Fig. 7: der Formenkomplex nach Fig. 2 in einem weiteren Verfahrensschritt,
- Fig. 8: der Formenkomplex nach Fig. 2 in einem weiteren Verfahrensschritt,

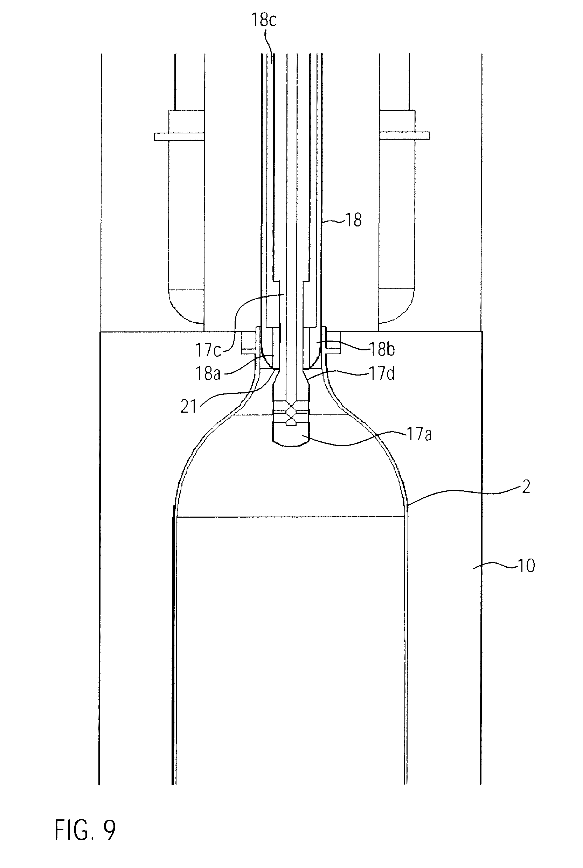

- Fig. 9: der Formenkomplex nach Fig. 2 in einem weiteren Verfahrensschritt,

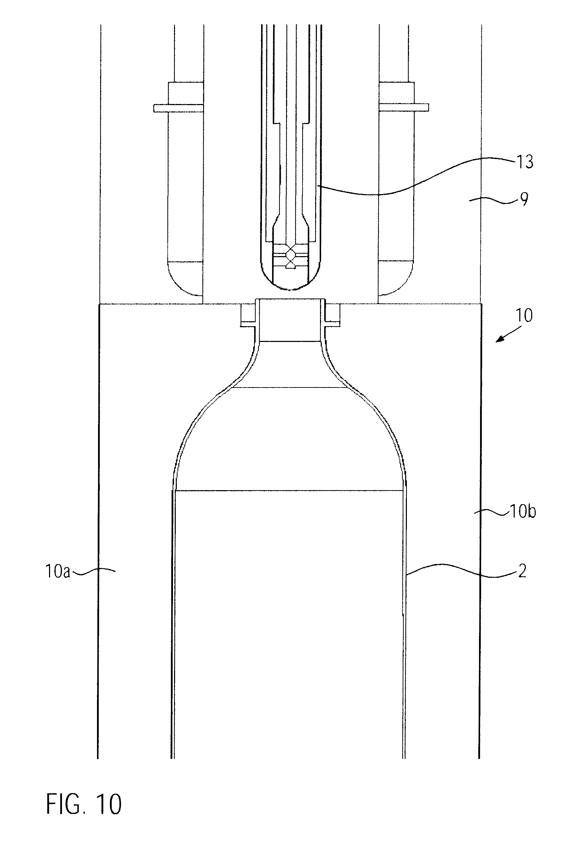

- Fig. 10: der Formenkomplex nach Fig. 2 in einem weiteren Verfahrensschritt, und
- Fig. 11: ein alternativer Formenkomplex.

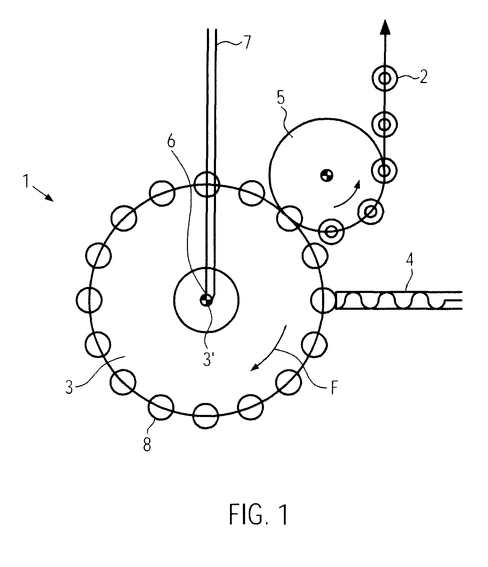

Aus Fig. 1 ist in äußerst schematischer Darstellung und in Draufsicht eine Vorrichtung 1 zum Herstellen von Behältern 2 aus Kunststoff, im dargestellten Ausführungsbeispiel Flaschen, insbesondere aus PET, dargestellt. Die Vorrichtung 1 enthält eine kontinuierliche Fördereinrichtung, insbesondere ein Karussell bzw. einen Rotor 3, der um eine Achse 3' in Förderrichtung F drehbar angetrieben wird und sich zunächst an einer Zufuhreinrichtung 4 für flüssigen Kunststoff, insbesondere einem Extruder, vorbei und anschließend zu einem Förderer 5 dreht, durch den fertige Behälter 2 vom Rotor 3 abgenommen und abtransportiert werden. Dem Rotor 3 ist weiterhin eine Befülleinrichtung zugeordnet, die beispielsweise einen Drehverteiler 6 und eine Zufuhrleitung 7 enthält. Die bisher beschriebenen Bauteile sind herkömmlicher Art, wobei jedoch die Zuordnung einer Zuführeinrichtung für flüssigen Kunststoff und Bestandteile einer Befülleinrichtung bislang noch nicht in einem einzigen Rotor kombiniert wurden.

Der Rotor 3 ist an seinem Umfang mit einer Vielzahl von Formenkomplexen 8 versehen, die in den nachfolgenden Zeichnungen näher erläutert sind.

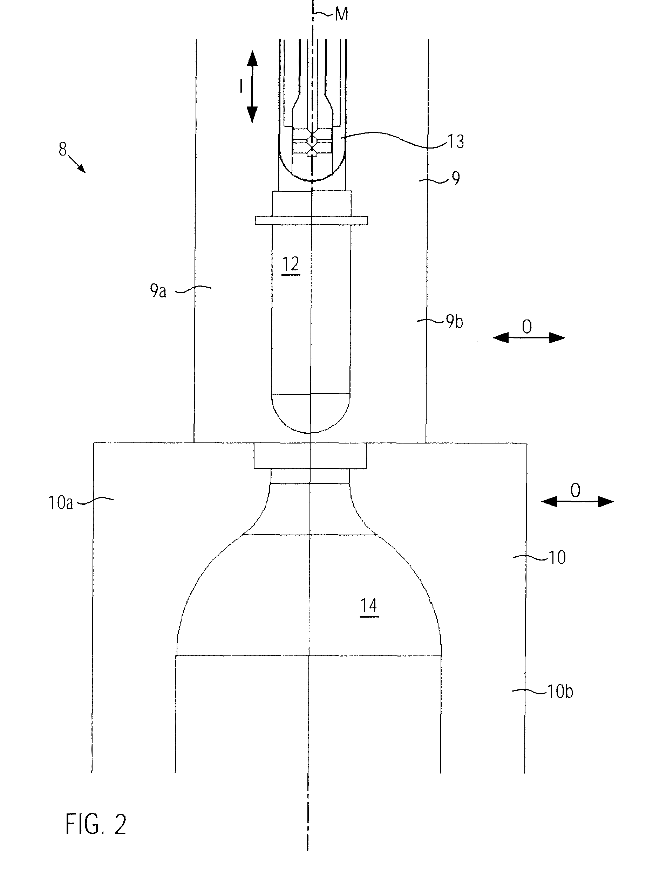

Fig. 2 zeigt einen derartigen Formenkomplex 8 in Teildarstellung, der eine Gießform 9 und eine Blasform 10 aufweist. Die Gießform 9 und die Blasform 10 sind entlang einer gemeinsamen Mittellinie M koaxial zueinander und in Vertikalrichtung aneinandergereiht. Dabei stoßen die Gießform 9 und die Blasform 10 unmittelbar aneinander an, d.h. zwischen den beiden Formen 9, 10 befindet sich keine Übertragungs- oder Förderstrecke, in der Umgebungsatmosphäre vorherrscht. Die Aneinanderreihung könnte bezüglich der jeweiligen Mittellinien auch winklig oder versetzt zueinander ausgestaltet sein.

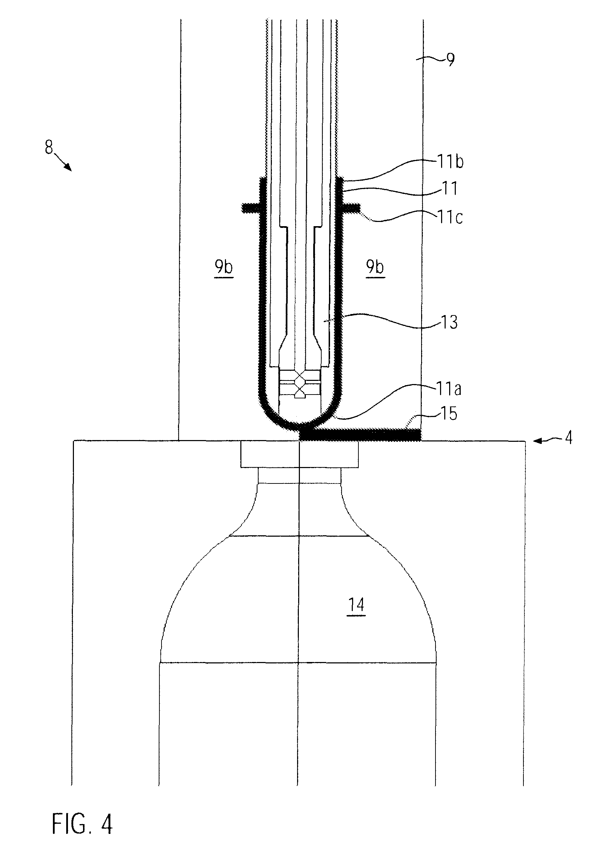

Die Gießform 9 dient zur Herstellung eines Preform 11 (Fig. 4), wie er als Vorformling zur Herstellung für Kunststoffbehälter üblich ist. Als "Preform" wird ein massiver Hohlkörper bezeichnet, der nur eine Mündungsöffnung und keine Schweißnähte (beispielsweise zum Verschweißen der gegenüberliegenden Seite) enthält, und bei dem bevorzugt diejenigen Teile, die bei den fertigen Behältern 2 möglichst maßgenau übereinstimmen müssen, bereits fertig vorgeformt sind. Diese maßhaltigen Teile sind beispielsweise ein Halsbereich 11 b zur Aufnahme eines Verschlusses (beispielsweise ein Gewindestutzen, ein Verschlusskragen oder ein Bördelrand) und ein sogenannter Kragen 11c, mit dem der fertige Behälter später in Halterungen oder Transporteinrichtungen oder dgl. eingepasst und transportiert werden soll.

Wie Fig. 2 zeigt, ist die Gießform 9 als Spritzgießform ausgebildet und enthält eine erste Formhälfte 9a und eine zweite Formhälfte 9b, die in Richtung des Doppelpfeiles O zum Öffnen der Gießform 9 voneinander entfernt und wieder zusammengesetzt werden können. Die Teilung der Gießform 9 erfolgt entlang einer Ebene, die die Mittellinie M enthält. Die Formhälften 9a, 9b umschließen jeweils hälftig einen Hohlraum 12 und bilden die Außenform, die die äußere Gestalt des Preform 11 bestimmt.

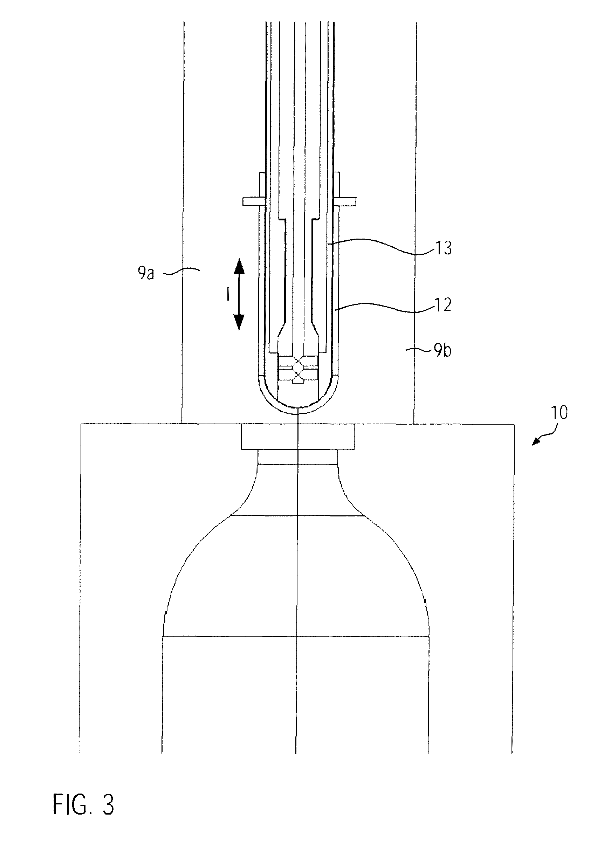

Die innere Gestalt des Preform wird durch eine Innenform 13 bestimmt, die in Richtung des Pfeiles I entlang der Mittellinie M in den Hohlraum 12 eintauchen und aus ihm herausgezogen werden kann. 1st die Innenform 13 im Hohlraum 12 positioniert, so weist sie einen allseitigen Abstand zum Hohlraum 12 auf, so dass dadurch die Wandstärke des Preform 11 definiert wird, wie dies in Fig. 3 näher ersichtlich ist.

Die Blasform 10 enthält ebenfalls wenigstens zwei Blasformteile 10a, 10b, die in der Ebene der Mittellinie M getrennt sind und einen Hohlraum 14 umschließen, der die Außenform des fertigen Behälters 2 bestimmt. Auch die Formteile 10a, 10b der Blasform 10 sind in Richtung des Pfeiles O zu öffnen und zu schließen.

Befindet sich ein Formenkomplex 8 im Bereich der Kunststoffzuführung 4, wird, wie Fig. 4 zeigt, flüssiger Kunststoff über eine Eingussstrecke 15 in die Gießform 9 eingedrückt, bis der durch die Außenform 9a, 9b und die Innenform 13 definierte Hohlraum 12 vollständig gefüllt ist. Das Einbringen des Kunststoffes erfolgt durch Spritzen.

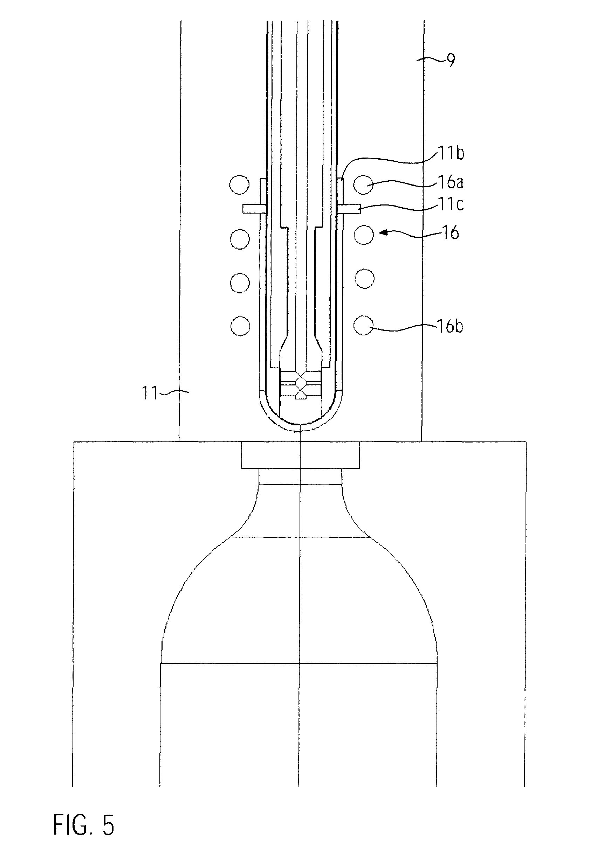

Wie Fig. 5 zeigt, ist die Spritzform 9 mit einer Temperiereinrichtung 16 versehen, mit deren Hilfe dem sich nunmehr in der Gießform 9 befindlichen Preform 11 ein gewünschtes Temperaturprofil aufgeprägt werden kann. Beispielsweise können mit Hilfe einer bereichsweise vorgesehenen Kühleinrichtung 16a die maßhaltig zu bleibenden Bereiche am Hals 11b und am Kragen 11c auf eine Temperatur gekühlt werden, bei der der verwendete Kunststoff nicht oder nur mit wesentlich erhöhtem Kraftaufwand gereckt oder gedehnt werden kann. In anderen Bereichen, beispielsweise im Bereich 16b, kann der Preform 11 erwärmt oder auf Temperatur gehalten werden.

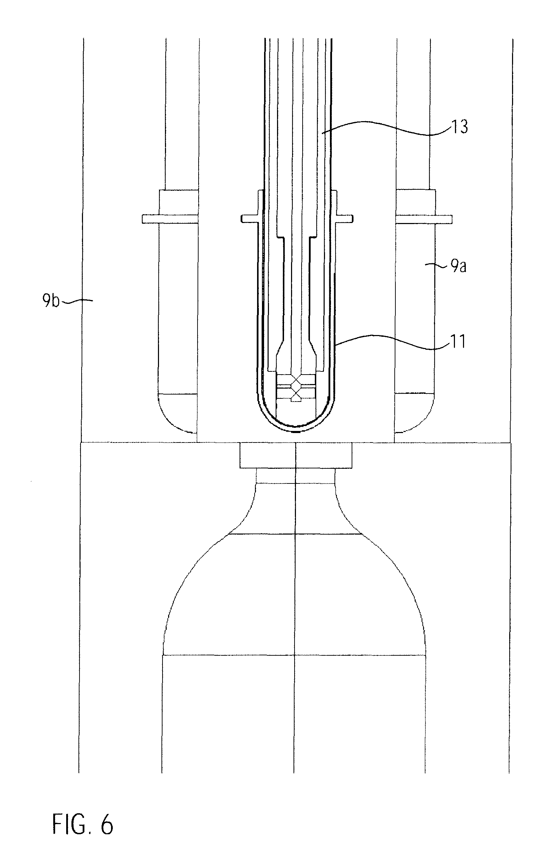

Anschließend werden die Formhälften 9a und 9b, wie Fig. 6 zeigt, auseinandergefahren und geben den auf der Innenform 13 sitzenden Preform 11 frei.

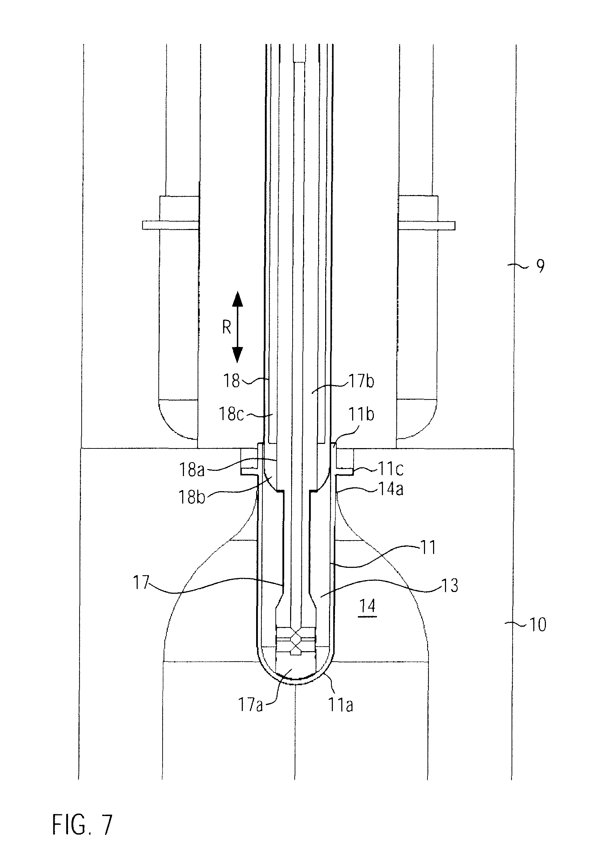

Die Innenform 13 der Gießform 9 ist für eine Vielzahl weiterer Aufgaben ausgebildet. So bewegt sich nach dem Öffnen der Gießform 9 die Innenform 13, wie im Vergleich der Fig. 6 und 7 zu sehen, als Übergabeeinrichtung aus dem Bereich der Gießform 9 nach unten in den Bereich der Blasform 10. Im dargestellten Ausführungsbeispiel ist der durch die Blasform 10 definierte Hohlraum 14 so bemessen, dass der Preform 11 ohne Öffnen der Blasform 10 in den Hohlraum 14 (über die spätere Einfüllöffnung 14a des Behälters 2) eingesetzt werden kann. Bei anderen Gestaltungen kann jedoch auch die Blasform 10 zur Aufnahme des Preform 11 geöffnet werden.

Die Innenform 13 fährt so weit in den Hohlraum 14 der Blasform 10 ein, dass der Preform 11 in nachfolgend beschriebener Weise in der korrekten Blasposition positioniert werden kann.

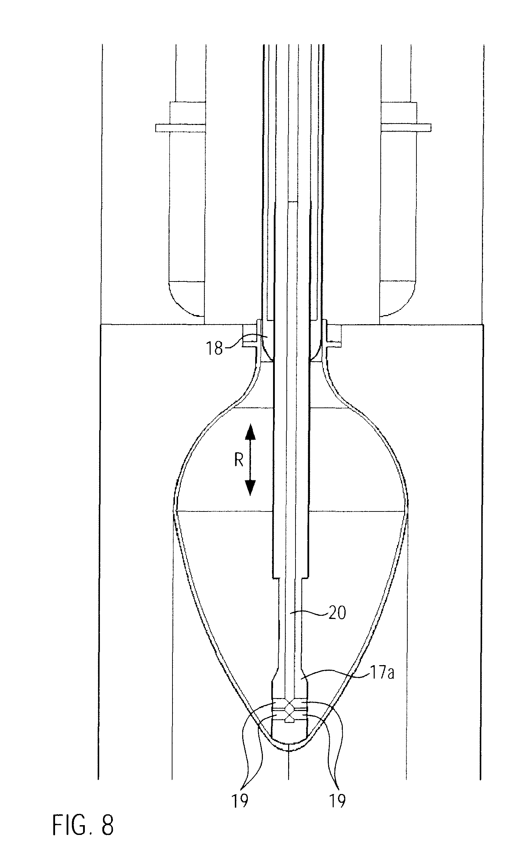

Die Innenform 13 enthält eine bei Blasformen übliche Reckstange 17, die im dargestellten Ausführungsbeispiel in einer äußeren Hülse 18 aufgenommen ist. Die Reckstange 17 ist koaxial zur Mittellinie M in der äußeren Hülse 18 angeordnet und relativ zu ihr bewegbar. Die Außenseite der äußeren Hülse dient der Ausformung der Innenseite des Preform 11 und wird im dargestellten Ausführungsbeispiel (siehe Fig. 7 oder 8) zumindest bis zum Halsbereich in den Hohlraum 14 der Blasform 10 eingefahren. Die Reckstange 17 wird anschließend in Richtung des Doppelpfeiles R relativ zur Hülse 18 entlang der Mittellinie M axial verschoben, tritt aus einer Öffnung 18a im Kopf 18b der Hülse abdichtend aus und streift den Preform 11 von der Innenform 13 in den Hohlraum 14. Außerhalb des Kopfes 18b ist zwischen der Reckstange 17 und der Hülse 18 ein Hohlraum 18c vorgesehen, durch den beispielsweise Kühlmittel eingebracht werden kann, der den Kopf 18b der Hülse 18 und somit die daran anliegenden maßhaltig zu bewahrenden Teile 11 b, 11 c kühlt.

Die Reckstange 17 ist in bekannter Weise mit einem an den Boden 11a des Preform 11 angepassten Kopf 17a versehen, durch den der Boden 11a durch weiteres Ausfahren der Reckstange 17 in Axialrichtung zur Mittellinie M gereckt werden kann, wie dies in Fig. 8 gezeigt ist.

Eine weitere Funktion der Innenform 13 besteht in ihrer Ausgestaltung als Blaslanze, wobei es die Reckstange 17 ist, die in ihrem Kopf 17a mit Luftauslassöffnungen 19 versehen ist, die quer zur Mittellinie M austreten und über eine Zufuhrleitung 20 in üblicher Weise mit Blasgas, entweder Druckluft oder ein anderes Gas unter Druck, versorgt werden. Durch diese Austrittsöffnungen 19 wird so lange Druckgas in das Innere des Preform 11 eingeleitet, bis dieser sich allseitig, unterstützt durch die Reckstange 17, an die Innenwandungen des Hohlraums 14 der Blasformhälften 10a, 10b angelegt hat und der Behälter 2 somit fertig ausgeformt ist.

Die Reckstange 17 hat in Axialrichtung außer einem stärkeren Bereich 17b, der den Kopf 17a umfasst und in der Lage ist, die Öffnung 18a des Kopfes 18b der Hülse 18 zu verschließen, einen schmaleren Bereich 17c, dessen Außenweite geringer ist als die Öffnung 18a des Kopfes 18b der Hülse 18. 1st der Behälter 2 ausgeformt, so zieht sich die Reckstange 17 so weit in die Hülse 18 zurück, dass der schmale Bereich 17c im Inneren der Öffnung 18a des Hülsenkopfes 18b zu liegen kommt. Der schmalere Bereich 17c geht über eine Schrägfläche 17d in den stärkeren Bereich 17b der Reckstange 17 über, so dass je nach Lage der Schrägfläche 17d zwischen dem schmalen Bereich 17c und der Öffnung 18 ein als Füllventil dienender Ringspalt 21 mit einstellbarem Durchflussquerschnitt verbleibt. Wird jetzt in den Hohlraum 18c im Inneren der Hülse 18 Produkt eingefüllt, so tritt es durch den Ringspalt 21 aus und füllt den Behälter 2. Die Innenform 13 ist somit auch als Befülleinrichtung einzusetzen.

Die Gießform 9 ist bevorzugt relativ zur Blasform 10 bewegbar, so dass sie den Raum über der Blasform 10 freigeben kann. Dadurch ist es möglich, den Behälter 2 mit einer geeigneten Verschließeinrichtung zu verschließen, während er sich noch in der Blasform 10 befindet.

Der Behälter wird aus der Blasform 10 entlassen, indem die Blasformhälften 10a, 10b geöffnet werden, nachdem sich die Innenform 13 vollständig in die Gießform 9 zurückgezogen hat. Die Behälter 2 werden vom Förderrotor 5 übernommen und abtransportiert, während sich die Gießform 9 wieder um die Innenform 13 schließt und für einen neuen Spritzgießvorgang bereit ist.

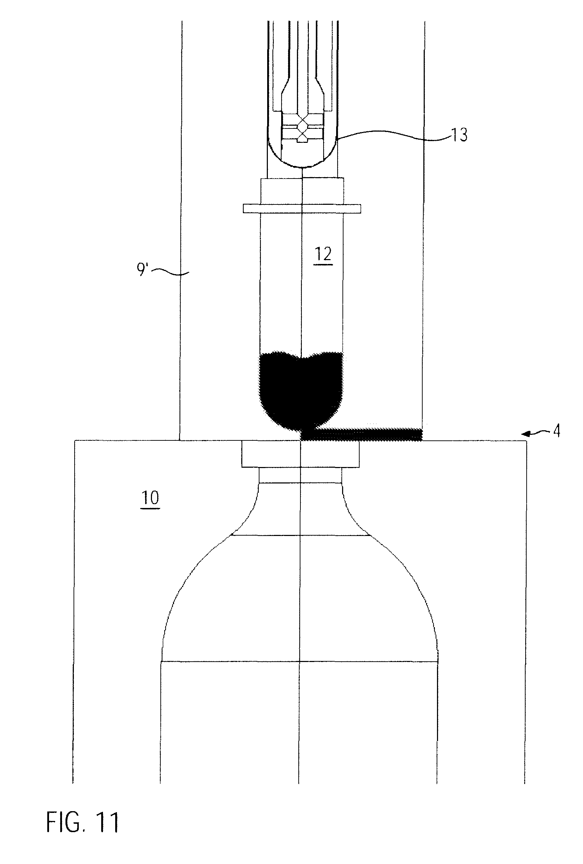

Anstelle der Spritzgussform kann die Gießform 9 auch als Pressform für einen Pressguss ausgelegt sein, wie er in Fig. 11 dargestellt ist. Zu diesem Zweck wird die Innenform 13, die im Übrigen ebenso ausgebildet ist wie im ersten Ausführungsbeispiel, vor dem Einfüllen von flüssigem Kunststoff vollständig aus dem Hohlraum 12 zurückgezogen, und in den Hohlraum 12 eine genau abgemessene Menge flüssigen Kunststoffs eingeführt. Wird dann die Innenform 13 in den Hohlraum 12 abgesenkt, bis sie allseitig einen gleichmäßigen Abstand zum Hohlraum 12 aufweist, wird der flüssige Kunststoff gleichmäßig verteilt und es ergibt sich ebenfalls der in Fig. 4 dargestellte Preform 11.

Mit dem beschriebenen erfindungsgemäßen Formenkomplex 8 ist es somit möglich, den Preform direkt aus der Wärme der Gießform unmittelbar an die Blasform zu übergeben, so dass eine definierte Temperatur eingehalten werden kann. Darüber hinaus wird auch das vorbestimmte Temperaturprofil aufrechterhalten.

In Abwandlung des beschriebenen und gezeichneten Ausführungsbeispiels ist die Erfindung auch dort einsetzbar, wo der Behälter nicht direkt in der Blasform befüllt werden muss oder kann. 1st eine Befüllung nicht notwendig, so könnte statt der beschriebenen übereinanderliegenden Anordnung von Gießform und Blasform auch eine horizontal nebeneinander liegende Anordnung möglich sein, vorausgesetzt, beide Formen sind koaxial zueinander angeordnet, so dass eine unmittelbare Übergabe aus der Gießform in die Blasform möglich ist. Die Funktion von Innenform, Reckstange und Blaslanze kann auch durch ein einziges Bauteil erfüllt werden. Die Befüllung des Behälters kann unter Umständen auch durch andere Bereiche des Formenkomplexes erfolgen. In einer bevorzugten Ausführungsform wird der Preform bzw. der Behälter von der Blasform und/oder Gießform kontinuierlich transportiert. Insbesondere sind die Blasform und/oder Gießform auf einem rotierenden Karussell angeordnet. In einer weiteren bevorzugten Ausführungsform wird der Preform bzw. der Behälter von einer stationär angeordneten Blasform und/oder Gießform behandelt.

## Patentansprüche

1. Vorrichtung (1) zum Herstellen von Behältern (2) aus Kunststoff, mit einer Gießform (9) zum Herstellen eines Preform (11) und einer Blasform (10) zum Fertigstellen des Behälters (2), **dadurch gekennzeichnet, dass** die Gieß- und die Blasform (9, 10) zu einem Formenkomplex (8) aneinandergereiht sind.

2. Vorrichtung nach Anspruch 1, **dadurch gekennzeichnet, dass** die Gieß- und die Blasform (9, 10) koaxial zueinander angeordnet sind.

3. Vorrichtung nach Anspruch 2, **dadurch gekennzeichnet, dass** die Gießform (9) eine Innen- und eine Außenform (9a, 9b, 13) aufweist, wobei die Innenform (13) der Gießform (9) in Axialrichtung sowohl in der Gießform (9) als auch in der Blasform (10) bewegbar ist.

4. Vorrichtung nach Anspruch 3, **dadurch gekennzeichnet, dass** die Innenform (13) eine Überführungseinrichtung zum Überführen des Preform (11) von der Gießform (9) in die Blasform (10) enthält.

5. Vorrichtung nach Anspruch 3 oder 4, **dadurch gekennzeichnet, dass** die Innenform (13) eine Reckdorneinrichtung (17) für die Blasform (10) enthält.

6. Vorrichtung nach einem der Ansprüche 3 bis 5, **dadurch gekennzeichnet, dass** die Innenform (13) eine Blasluftlanze für die Blasform (10) aufweist.

7. Vorrichtung nach einem der Ansprüche 3 bis 6, **dadurch gekennzeichnet, dass** die Innenform (13) eine axial bewegbare Hülse (18) aufweist, in der eine Reckstange (17) und/oder eine Blasluftlanze axial relativ zur Hülse (18) bewegbar aufgenommenen ist.

8. Vorrichtung nach einem der Ansprüche 1 bis 6, **dadurch gekennzeichnet, dass** die Gießform (9) mit einer Temperiereinrichtung (16) zum Aufprägen eines vorbestimmten Temperaturprofils auf den Preform (11) versehen ist.

9. Vorrichtung nach einem der Ansprüche 3 bis 8, **dadurch gekennzeichnet, dass** die Innenform (13) mit einer Kühleinrichtung versehen ist.

10. Vorrichtung nach einem der Ansprüche 1 bis 9, **dadurch gekennzeichnet, dass** der Formenkomplex (8) mit einer Zufuhrleitung (7) zum Befüllen des Behälters (2) verbunden ist.

11. Vorrichtung nach einem der Ansprüche 3 bis 10, **dadurch gekennzeichnet, dass** die Innenform (13) oder die Außenform (9a, 9b) mit einer Zufuhrleitung (7) zum Befüllen des Behälters (2) verbunden ist.

12. Vorrichtung nach Anspruch 11, **dadurch gekennzeichnet, dass** die Zufuhrleitung (7) mit einer Hülse (18) der Innenform (13) verbunden ist, in der eine Reckstange (17) und/oder eine Blasluftlanze (17) axial relativ zur Hülse (18) bewegbar aufgenommenen ist und mit der Hülse (18) ein als Ventil ausgebildeten Ringspalt (21) bildet.

13. Vorrichtung nach einem der Ansprüche 1 bis 12, **dadurch gekennzeichnet, dass** die Gießform (9) eine Spritzgießform ist.

14. Vorrichtung nach einem der Ansprüche 1 bis 12, **dadurch gekennzeichnet, dass** die Gießform (9) eine Pressform ist.

15. Vorrichtung nach einem der Ansprüche 1 bis 14, **dadurch gekennzeichnet, dass** dem Formenkomplex (8) eine Verschließeinrichtung für den Behälter (2) zugeordnet ist.

16. Verfahren zum Herstellen von Behältern (2) aus Kunststoff, wobei zunächst in einer Gießform (9) ein Preform (11) hergestellt und anschließend in einer Blasform (10) zum Behälter (2) fertiggestellt wird, **dadurch gekennzeichnet, dass** der Preform (11) aus der Wärme der Gießform (9) unmittelbar in die Blasform (10) überführt wird.
